# EUROPÄISCHE PATENTSCHRIFT

(11) **EP 4 326 652 B1**
(45) Veröffentlichungstag und Bekanntmachung des Hinweises auf die Patenterteilung: **24.12.2025**
(21) Anmeldenummer: 22722769.1
(22) Anmeldetag: 13.04.2022
(51) Int. Cl.: B65G 47/61, B65G 43/08, B65G 47/30

(54) **VERFAHREN ZUM BETREIBEN EINES FÖRDERERS FÜR HINTEREINANDER FOLGENDE GÜTER UND ENTSPRECHENDES FÖRDERSYSTEM**
METHOD FOR OPERATING A CONVEYOR FOR SUCCESSIVE GOODS, AND CORRESPONDING CONVEYOR SYSTEM
PROCÉDÉ DE FONCTIONNEMENT D'UN CONVOYEUR POUR PRODUITS SUCCESSIFS ET SYSTÈME DE TRANSPORT CORRESPONDANT

(30) Priorität: 21.04.2021 DE 102021110132
(43) Veröffentlichungstag der Anmeldung: 28.02.2024
(73) Patentinhaber: Dematic Logistics GmbH, 63150 Heusenstamm (DE)
(72) Erfinder: ZEIDLEWICZ, Lars, 48282 Emsdetten (DE)
(74) Vertreter: Moser Götze & Partner Patentanwälte mbB
(86) Internationale Anmeldenummer: PCT/EP2022/059931
(87) Internationale Veröffentlichungsnummer: WO 2022/223412

(56) Entgegenhaltungen:
- EP-A1- 0 765 826
- EP-A1- 3 543 181
- EP-A1- 3 800 146
- GB-A- 2 277 071
- US-A1- 2008 023 294
- US-B2- 6 702 095

## Beschreibung

Die Erfindung betrifft ein Verfahren zum Betreiben eines Förderers für hintereinander folgende Güter, bei dem die Güter nacheinander in einem Einschleuser auf den Förderer aufgegeben werden und an einer vorbestimmten Stelle des Förderers über eine Weiche ausgeschleust werden, nach Anspruch 1.

Hierbei handelt es sich vorzugsweise um sogenannte Hängeförderer bzw. Überkopfförderer für hängende Ware, die entweder in Taschen, Beuteln etc. aufgenommen oder mittels Bügeln transportiert werden, die jeweils in Adapter eingreifen und dann über oben-laufende Förderketten bewegt werden.

Aus der EP 2 789 555 A1 ist z. B. eine Vorrichtung zum auftragsorientierten Bereitstellen von Einzelwaren für mehrere Aufträge aus einem Warenlager bekannt, die mindestens einen mit einem Warenlager verbundenen Zwischenspeicher zum Zwischenspeichern von Einzelwaren mindestens eines Auftrags, jeweils einen mit dem mindestens einen Zwischenspeicher verbundenen Sammelbereich zum Sammeln der Einzelwaren des mindestens einen komplettierten Auftrags und einen mehrere Abgabelinien aufweisenden Trennbereich zum auftragsorientierten Bereitstellen der Einzelwaren des mindestens einen komplettierten Auftrags umfasst. Die EP 0 765 826 A1 offenbart die Merkmale des Oberbegriffs der Ansprüche 1 und 8.

Bei diesem System bestimmt der feste Abstand der Adapter und der feste Abstand der Mitnehmer der Antriebskette den Abstand des Transports aufeinanderfolgender Hängewaren bzw. Taschen, unabhängig davon, wie breit die Ware in Förderrichtung ist und wohin die Ware im System transportiert werden soll.

Demgegenüber besteht die Aufgabe der vorliegenden Erfindung darin, eine Möglichkeit zu schaffen, bei der der Abstand des Transports aufeinanderfolgender Güter, insbesondere Hängewaren bzw. Taschen, platzoptimiert einstellbar ist.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass, wenn die Güter nacheinander in einem Einschleuser auf den Förderer aufgegeben werden und an einer vorbestimmten Stelle des Förderers über eine Weiche ausgeschleust werden, wobei der Abstand zwischen aufeinanderfolgenden Gütern auf dem Förderer entweder minimiert wird, wenn diese aufeinanderfolgenden Güter an derselben Weiche ausgeschleust werden sollen, oder der Abstand der aufeinanderfolgenden Güter auf dem Förderer derart vergrößert wird, dass er dem minimalen Ausschleusabstand entspricht, wenn die aufeinanderfolgenden Güter nicht an derselben Weiche ausgeschleust werden sollen, es möglich ist, die Güter mit demselben Ziel enger auf der Förderstrecke des Förderers anzuordnen und so durch die Raumersparnis eine Kapazitätserhöhung zu erreichen.

Der Abstand kann alternativ für Güter ohne gleiches Ziel ebenfalls optimiert werden, wenn dann der Abstand mindestens so groß ist, dass die Weiche für die erste Ausschleusung betätigt, das Gut ausgeschleust und die Weiche wieder geschlossen werden kann, bevor das nächste Gut an der Weiche vorbeigefördert wird.

Mit anderen Worten, Güter mit demselben Ziel werden als Pulk mit geringem Abstand zueinander eingeschleust, wohingegen Güter mit unterschiedlichem Ziel so beabstandet werden, dass sie gezielt und dann gemeinsam als Pulk ausschleusbar sind. Das spart nicht nur Platz auf dem Förderer, sondern auch Ausschleuszeit in der Weiche.

Erfindungsgemäß ist der Förderer ein Hängeförderer mit einem Kettenantrieb und der Kettenantrieb definiert eine feste Teilung und der Abstand der Güter zueinander wird durch den variablen Abstand des Eingriffs in der Kette festgelegt. Mit anderen Worten, der Abstand der Güter wird festgelegt durch den Eingriff bzw. die Wechselwirkung mit der Kette. Diese weist üblicherweise feste Abstände der Mitnehmer bzw. Ösen zum Eingriff auf. Diese feste Teilung definiert ein Raster innerhalb dessen die Güter in die Kette (mit oder ohne Adapter) eingehängt werden können.

Zusätzlich kann es von Vorteil sein, wenn der Abstand der Güter zueinander auch deren jeweilige Dicke bzw. Erstreckung in Förderrichtung inkludiert. Die jeweilige Dicke kann vorbestimmt und hinterlegt werden, um im Einschleuser ausgelesen zu werden. Dazu kann der Einschleuser mit einem Identifizierungsmittel ausgestattet sein, um z. B. das Gut zu erkennen und die Dicke aus einer Datenbank auszulesen. Die Güter können also im Einschleuser identifiziert und/oder deren Eigenschaften, insbesondere Dicke in Förderrichtung, bestimmt werden.

Zusätzlich oder alternativ, kann der Abstand der aufeinanderfolgenden Güter auf dem Förderer anhand einer Dickenmesseinrichtung in dem Einschleuser zur weiteren Optimierung eingestellt werden.

Es ist im Rahmen der Erfindung möglich, die Güter nacheinander vereinzelt in einem Einschleuser auf den Förderer aufzugeben. Mit anderen Worten, die Güter können im Einschleuser über eine Vereinzelung einzeln eingeschleust werden. Alternativ kann auch eine Gruppe oder ein Pulk von Gütern vom Einschleuser in einem Rutsch eingeschleust werden. Eine solche Gruppe kann dann vorzugsweise die Gruppe sein, die zumindest die aufeinanderfolgenden Güter umfasst, die an derselben Weiche ausgeschleust werden sollen.

Es versteht sich, dass entsprechende Förderer mindestens eine Sammelstrecke mit mehreren Einschleusern und mehreren Weichen umfassen.

Vorzugsweise wird der minimale Ausschleusabstand durch den Abstand der in Förderrichtung aufeinanderfolgenden Weichen bestimmt. Dieser kann so gewählt werden, dass trotz hoher Fördergeschwindigkeit genügend Zeit bleibt, um die Weiche für die erste Ausschleusung zu betätigen, das Gut auszuschleusen und die Weiche wieder zu schließen, bevor das nächste Gut an der Weiche vorbeigefördert wird.

Sinnvoll ist es, wenn der Abstand der aufeinanderfolgenden Güter im Einschleuser beim Einschleusen auf den Förderer einmalig festgelegt wird.

Die Erfindung betrifft auch ein entsprechendes Fördersystem mit einem Förderer für hintereinander folgende Güter und mit mindestens einem Einschleuser, um die Güter nacheinander auf den Förderer aufzugeben, und mit mindestens einer Weiche, um Güter an einer vorbestimmten Stelle des Förderers über die Weiche auszuschleusen, und mit einer Steuerung, die eingerichtet ist, um durch Ansteuerung des Einschleusers den Abstand zwischen aufeinanderfolgenden Gütern auf dem Förderer zu minimieren, wenn diese an derselben Weiche ausgeschleust werden sollen, oder den Abstand der aufeinanderfolgenden Güter auf dem Förderer derart zu vergrößern, dass er dem minimalen Ausschleusabstand entspricht, wenn diese nicht an derselben Weiche ausgeschleust werden sollen.

Erfindungsgemäß ist der Förderer ein Hängeförderer mit Kettenantrieb und der Kettenantrieb definiert eine feste Teilung und der Abstand der Güter zueinander wird durch den variablen Abstand des Eingriffs in der Kette festgelegt, und die Steuerung ist eingerichtet, Güter mit demselben Ziel als Pulk mit geringem Abstand zueinander einzuschleusen, wohingegen Güter mit unterschiedlichem Ziel so beabstandet werden, dass sie gezielt und dann gemeinsam als Pulk ausschleusbar sind.

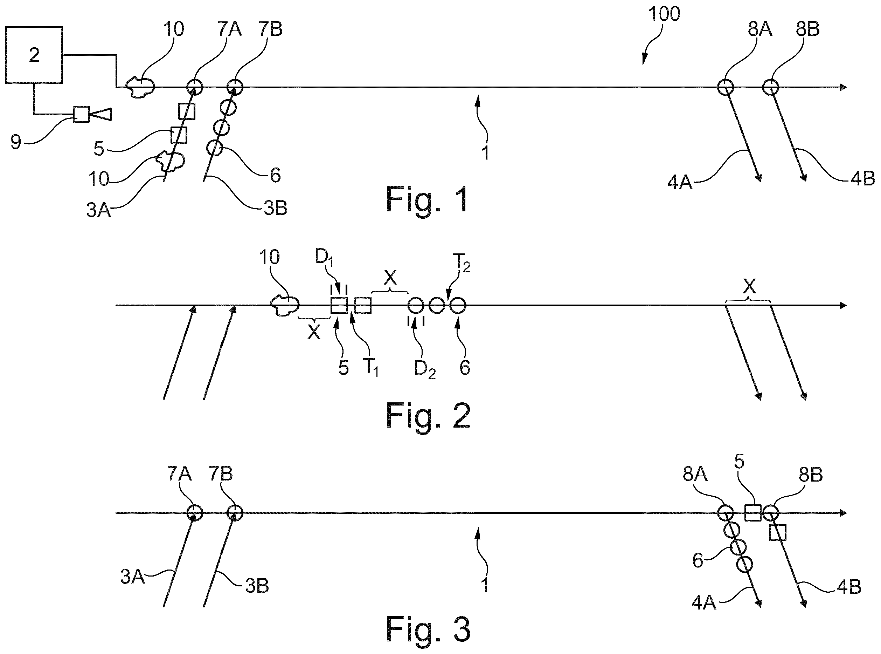

Weitere Details der Erfindung ergeben sich aus der nachfolgenden Beschreibung von Ausführungsbeispielen anhand der Zeichnung, in der
- Fig. 1: eine schematische Prinzipansicht eines Hängeförderersystems beim Einschleusen;
- Fig. 2: die schematische Prinzipansicht des Hängeförderersystems von Figur 1 nach dem Einschleusen und
- Fig. 3: die schematische Prinzipansicht des Hängeförderersystems von Figur 1 beim Ausschleusen
zeigt.

In den Figuren ist ein als Ganzes mit 100 bezeichnetes Hängeförderersystem gezeigt.

Es umfasst eine Hauptförderstrecke 1, die über Einschleusungen 3A, B mit Gütern 5, 6 gespeist wird und über Ausschleusungen 4A, B zum Weiterleiten der Güter im System verfügt.

Das Hängeförderersystem 100 wird mittels einer zentralen Steuerung 2 überwacht und gesteuert. Die Steuerung 2 regelt sowohl den Antrieb als auch die Einschleusungen 3 und Ausschleusungen 4.

Zusätzlich ist die Steuerung 2 an eine Dickenmesseinrichtung 9 in den Einschleusungen 3 angeschlossen, um die jeweilige Dicke der Güter in Förderrichtung optisch mittels Lichtgittern zu ermitteln und daraufhin den Abstand zueinander beim Eischleusen und somit auf der Förderstrecke 1 einzustellen.

Die Einschleusungen 3A, B verfügen über Aufgabeeinheiten 7A, B, die zum vereinzelten Aufgeben der Hängefördergüter 5, 6 auf die Förderstrecke 1 ausgebildet sind. Durch entsprechende Ansteuerung kann so auf der Strecke 1 ein Transportabstand T zwischen den Gütern aus der jeweiligen Einschleusung in Abhängigkeit ihrer jeweiligen Dicke D1, D2 und ihres Zieles (Ausschleusung) eingestellt werden.

Die Ausschleusungen 4A, B sind über steuerbare Weichen 8A, B an die Förderstrecke 1 angekoppelt bzw. gezielt mit Gütern beaufschlagbar. Die Ausschleusungen 4 führen zu Packstationen (nicht gezeigt).

Der Abstand X in Förderrichtung zwischen den Weichen 8A, B bzw. den Ausschleusungen 4A, B entspricht einem minimalen Ausschleusabstand, der so gewählt ist, dass trotz hoher Fördergeschwindigkeit, genügend Zeit bleibt, um die Weiche 8A für die erste Ausschleusung 4A zu betätigen, um das Gut 6 auszuschleusen und die Weiche 8A wieder zu schließen, bevor das nächste Gut 5 an der Weiche 8A vorbeigefördert wird, um zur Weiche 8B zu gelangen.

Die Güter 5, 6 in den jeweiligen Einschleusungen 3A, B sind im Zulauf sortiert worden, so dass diese im vorliegenden Beispiel auftragsrein sind.

Daher haben die Güter 5 alle ein gemeinsames Ziel, nämlich Ausschleusung 4B, und die Güter 6 ein davon abweichendes gemeinsames Ziel, nämlich Ausschleusung 4A.

Die weiteren Güter 10 dienen zur Verdeutlichung, dass diese andere Ziele, Abstände usw. haben.

Die Güter 5 haben eine Dicke D1 und die Güter 6 eine Dicke D2. Wie veranschaulicht, ist die Dicke D1 größer als die Dicke D2, so dass der Abstand T1 der Güter 5 zueinander größer ist als derjenige Abstand T2 der Güter 6.

Der Abstand T1 und auch der Abstand T2 sind daher bezüglich der Dicke D1, 2 in Förderrichtung minimiert.

Gleichzeitig ist der Transportabstand zwischen der Gruppe der Güter 5 und der Gruppe der Güter 6 gleich dem minimalen Ausschleusabstand X, da diese unterschiedlichen Ziele haben.

Der minimale absolute Abstand zweier Güter zueinander wird dadurch festgelegt, dass es sich bei dem Förderer um einen Hängeförderer handelt, der mit einem Kettenantrieb ausgestaltet ist, und der Kettenantrieb eine feste Teilung definiert und der Abstand der Güter zueinander durch den variablen Abstand des Eingriffs in die Kette festgelegt wird.

Die Güter 5, 6 sind dazu vorliegend in Hängetaschen aufgenommen, die über Adapter von der Antriebskette in bekannterweise (vgl. EP 3 480 142 A1) mitgenommen (bewegt) werden.

## Patentansprüche

1. Verfahren zum Betreiben eines Förderers (1) für hintereinander folgende Güter (5, 6), bei dem die Güter (5,6) nacheinander in einem Einschleuser (3A, 3B) auf den Förderer (1) aufgegeben werden und an einer vorbestimmten Stelle des Förderers (1) über eine Weiche (8A, 8B) ausgeschleust werden, wobei der Förderer (1) ein Hängeförderer mit einem Kettenantrieb ist und der Kettenantrieb eine feste Teilung definiert und der Abstand der Güter (5, 6) zueinander durch den variablen Abstand des Eingriffs in die Kette festgelegt wird,
**dadurch gekennzeichnet, dass**
der Abstand zwischen aufeinanderfolgenden Gütern (5, 6) auf dem Fördere (1) entweder minimiert wird, wenn diese aufeinanderfolgenden Güter (5, 6) an derselben Weiche (8A, 8B) ausgeschleust werden sollen, oder der Abstand der aufeinanderfolgenden Güter (5, 6) auf dem Förderer (1) derart vergrößert wird, dass er dem minimalen Ausschleusabstand entspricht wenn die aufeinanderfolgenden Güter (5, 6) nicht an derselben Weiche (8A, 8B) ausgeschleust werden sollen, so dass Güter (5, 6) mit demselben Ziel als Pulk mit geringem Abstand zueinander eingeschleust werden, wohingegen Güter (5, 6) mit unterschiedlichem Ziel so beabstandet werden, dass sie gezielt und dann gemeinsam als Pulk ausschleusbar sind.

2. Verfahren zum Betreiben eines Förderers nach Anspruch 1, **dadurch gekennzeichnet, dass** der Abstand der aufeinanderfolgenden Güter (5, 6) auf dem Förderer (1) minimiert wird, wenn die aufeinanderfolgenden Güter (5, 6) an derselben Weiche (8A, 8B) ausgeschleust werden sollen, weil sie zum selben Auftrag und/oder Ziel gehören.

3. Verfahren zum Betreiben eines Förderers (1) nach einem der vorhergehenden Ansprüche, **dadurch gekennzeichnet, dass** der Abstand der aufeinanderfolgenden Güter (5, 6) auf dem Förderer anhand einer Dickenmesseinrichtung (9) in dem Einschleuser (3A, 3B) zur weiteren Optimierung eingestellt wird.

4. Verfahren zum Betreiben eines Förderers (1) nach einem der vorhergehenden Ansprüche, **dadurch gekennzeichnet, dass** der Förderer eine Sammelstrecke mit mehreren Einschleusern (3A, 3B) und mehreren Weichen (8A, 8B) umfasst.

5. Verfahren zum Betreiben eines Förderers (1) nach einem der vorhergehenden Ansprüche, **dadurch gekennzeichnet, dass** der minimale Ausschleusabstand durch den Abstand der in Förderrichtung aufeinanderfolgenden Weichen (8A, 8B) bestimmt wird.

6. Verfahren zum Betreiben eines Förderers (1) nach einem der vorhergehenden Ansprüche, **dadurch gekennzeichnet, dass** der Abstand der aufeinanderfolgenden Güter im Einschleuser (3A, 3B) beim Einschleusen auf den Förderer (1) einmalig festgelegt wird.

7. Verfahren zum Betreiben eines Förderers (1) nach einem der vorhergehenden Ansprüche, **dadurch gekennzeichnet, dass** die Güter (5, 6) im Einschleuser (3A, 3B) identifiziert und/oder deren Eigenschaften, insbesondere Dicke in Förderrichtung, bestimmt werden.

8. Fördersystem (100) mit einem Förderer (1) für hintereinander folgende Güter (5, 6) und mit mindestens einem Einschleuser (3A, 3B), um die Güter (5, 6) nacheinander auf den Fördere (1) aufzugeben, und mit mindestens einer Weiche (8A, 8B), um Güter (5, 6) an einer vorbestimmten Stelle des Förderers über die Weiche (8A, 8B) auszuschleusen, und mit einer Steuerung (2),
wobei der Förderer (1) ein Hängeförderer mit Kettenantrieb ist und der Kettenantrieb eine feste Teilung definiert und der Abstand der Güter (5, 6) zueinander durch den variablen Abstand des Eingriffs in die Kette festgelegt wird,
**dadurch gekennzeichnet, dass**
die Steuerung (2) eingerichtet ist, um durch Ansteuerung des Einschleusers (3A, 3B) den Abstand zwischen aufeinanderfolgenden Gütern (5, 6) auf dem Förderer (1) zu minimieren, wenn diese an derselber Weiche (8A, 8B) ausgeschleust werden sollen, oder den Abstand der aufeinanderfolgenden Güter (5, 6) auf dem Förderer (1) derart zu vergrößern, dass er dem minimalen Ausschleusabstand entspricht, wenn diese nicht an derselben Weiche (8A, 8B) ausgeschleust werden sollen, und die Steuerung (2) eingerichtet ist, Güter (5, 6) mit demselben Ziel als Pulk mit geringem Abstand zueinander einzuschleusen, wohingegen Güter (5, 6) mit unterschiedlichem Ziel so beabstandet werden, dass sie gezielt und dann gemeinsam als Pulk ausschleusbar sind.

## Claims

1. Method for operating a conveyor (1) for goods (5, 6) following one behind the other, wherein the goods (5, 6) are fed onto the conveyor (1) one after another in an introduction means (3A, 3B) and are discharged at a predetermined location of the conveyor (1) via a switch point (8A, 8B), wherein the conveyor (1) is an overhead conveyor having a chain drive and the chain drive defines a fixed division and the distance between the goods (5, 6) is fixed by the variable distance of the engagement in the chain, **characterised in that** the distance between successive goods (5, 6) on the conveyor (1) is either minimised when these successive goods (5, 6) are to be discharged at the same switch point (8A, 8B), or the distance between the successive goods (5, 6) on the conveyor (1) is enlarged such that it corresponds to the minimum discharge distance when the successive goods (5, 6) are not to be discharged at the same switch point (8A, 8B), so that goods (5, 6) having the same destination are introduced within a small distance of each other as a batch, whereas goods (5, 6) having a different destination are spaced apart from each other such that they can be discharged in a targeted manner and then together as a batch.

2. Method for operating a conveyor as claimed in claim 1, **characterised in that** the distance between the successive goods (5, 6) on the conveyor (1) is minimised when the successive goods (5, 6) are to be discharged at the same switch point (8A, 8B) because they belong to the same order and/or destination.

3. Method for operating a conveyor (1) as claimed in any one of the preceding claims, **characterised in that** the distance between the successive goods (5, 6) on the conveyor is adjusted for further optimisation using a thickness measuring device (9) in the introduction means (3A, 3B).

4. Method for operating a conveyor (1) as claimed in any one of the preceding claims, **characterised in that** the conveyor comprises a gathering path having a plurality of introduction means (3A, 3B) and a plurality of switch points (8A, 8B).

5. Method for operating a conveyor (1) as claimed in any one of the preceding claims, **characterised in that** the minimum discharge distance is determined by the distance between the successive switch points (8A, 8B) in the conveying direction.

6. Method for operating a conveyor (1) as claimed in any one of the preceding claims, **characterised in that** the distance between the successive goods in the introduction means (3A, 3B) is fixed once upon introduction of the goods onto the conveyor (1).

7. Method for operating a conveyor (1) as claimed in any one of the preceding claims, **characterised in that** the goods (5, 6) are identified in the introduction means (3A, 3B) and/or the properties thereof, in particular thickness in the conveying direction, are determined.

8. Conveying system (100) having a conveyor (1) for goods (5, 6) following one behind the other, and having at least one introduction means (3A, 3B) in order to feed the goods (5, 6) onto the conveyor (1) one after another, and having at least one switch point (8A, 8B) in order to discharge goods (5, 6) at a predetermined location of the conveyor via the switch point (8A, 8B) , and with a controller (2), wherein the conveyor (1) is an overhead conveyor having a chain drive and the chain drive defines a fixed division and the distance between the goods (5, 6) is fixed by the variable distance of the engagement in the chain, **characterised in that** the controller (2) is configured to minimise the distance between successive goods (5, 6) on the conveyor (1) by actuating the introduction means (3A, 3B), when said goods are to be discharged at the same switch point (8A, 8B), or to enlarge the distance between the successive goods (5, 6) on the conveyor (1) such that it corresponds to the minimum discharge distance when said goods are not to be discharged at the same switch point (8A, 8B), and the controller (2) is configured to introduce goods (5, 6) having the same destination within a small distance of each other as a batch, whereas goods (5, 6) having a different destination are spaced apart from each other such that they can be discharged in a targeted manner and then together as a batch.

## Revendications

1. Procédé pour faire fonctionner un convoyeur (1) de marchandises (5, 6) se succédant les unes derrière les autres, dans lequel on charge les marchandises (5, 6) sur le convoyeur (1) les unes après les autres dans un alimentateur (3A, 3B) et, en un endroit déterminé à l'avance du convoyeur (1), on les décharge par un aiguillage (8A, 8B), dans lequel le convoyeur (1) est un convoyeur à suspension comprenant un entraînement par chaîne et l'entraînement par chaîne définit un pas fixe et on fixe la distance entre les marchandises (5, 6) les unes par rapport aux autres par la distance variable de la prise dans la chaîne,
**caractérisé en ce que**
on minimise la distance entre les marchandises (5, 6) successives sur le convoyeur (1) si les marchandises (5, 6) successives doivent être déchargées sur le même aiguillage (8A, 8B) ou on agrandit la distance entre les marchandises (5, 6) successives sur le convoyeur (1), de manière à ce qu'elle corresponde à une distance minimum de décharge si les marchandises (5, 6) successives ne doivent pas être déchargées sur le même aiguillage (8A, 8B) de sorte que des marchandises (5, 6) ayant la même destination sont déchargées en groupe ayant une petite distance entre elles, tandis que l'on met à distance des marchandises ayant une destination différente de manière à pouvoir les décharger, de manière ciblée, et ensuite en commun en groupe.

2. Procédé pour faire fonctionner un convoyeur suivant la revendication 1, **caractérisé en ce que** l'on minimise la distance entre les marchandises (5, 6) successives sur le convoyeur (1) si l'on doit décharger les marchandises (5, 6) successives sur le même aiguillage (8A, 8B), parce qu'elles appartiennent à la même commande et/ou ont la même destination.

3. Procédé pour faire fonctionner un convoyeur (1) suivant l'une des revendications précédentes, **caractérisé en ce que** l'on règle la distance entre les marchandises (5, 6) successives sur le convoyeur à l'aide d'un dispositif (9) de mesure de densité dans l'alimentateur (3A, 3B) pour une optimisation supplémentaire.

4. Procédé pour faire fonctionner un convoyeur (1) suivant l'une des revendications précédentes, **caractérisé en ce que** le convoyeur comprend une zone collectrice ayant plusieurs alimentateurs (3A, 3B) et plusieurs aiguillages (8A, 8B).

5. Procédé pour faire fonctionner un convoyeur (1) suivant l'une des revendications précédentes, **caractérisé en ce que** l'on détermine la distance minimum de décharge par la distance des aiguillages (8A, 8B) successifs dans le sens de convoyage.

6. Procédé pour faire fonctionner un convoyeur (1) suivant l'une des revendications précédentes, **caractérisé en ce que** l'on fixe une fois pour toute, lors de la décharge sur le convoyeur (1), la distance entre les marchandises successives dans l'alimentateur (3A, 3B).

7. Procédé pour faire fonctionner un convoyeur (1) suivant l'une des revendications précédentes, **caractérisé en ce que** l'on identifie les marchandises (5, 6) dans l'alimentateur (3A, 3B) et/ou on détermine leur propriété, en particulier leur densité, dans le dispositif convoyeur.

8. Système (100) de convoyeur comprenant un convoyeur (1) pour des marchandises (5, 6) se succédant les unes derrière les autres et comprenant au moins un alimentateur (3A, 3B), qui charge les marchandises (5, 6) les unes après les autres sur le convoyeur (1), et au moins un aiguillage (8A, 8B), qui décharge les marchandises (5, 6) en un point déterminé à l'avance du convoyeur par les aiguillages (8A, 8B) et comprenant une commande (2),
dans lequel le convoyeur (1) est un convoyeur à suspension ayant un entraînement par chaîne et l'entraînement par chaîne définit un pas fixe et on fixe la distance entre les marchandises (5, 6) les unes par rapport aux autres, par la distance variable de la prise dans la chaîne,
**caractérisé en ce que**
la commande (2) est agencée pour minimiser par commande de l'alimentateur (3A,3B), la distance entre les marchandises (5, 6) successives sur le convoyeur (1) si celles-ci doivent être déchargées sur le même aiguillage (8A, 8B) ou pour agrandir la distance entre les marchandises (5, 6) successives sur le convoyeur (1) de manière à ce qu'elle corresponde à une distance minimum de déchargement si celles-ci ne doivent pas être déchargées sur le même aiguillage (8A, 8B), et
la commande (2) est agencée pour alimenter des marchandises (5, 6) ayant la même destination en groupe ayant une petite distance entre-elles tandis que des marchandises (5, 6) ayant des distances différentes, sont mises à distance de manière à pouvoir être déchargées de manière ciblée et seulement conjointement en groupe.
